# EUROPÄISCHE PATENTSCHRIFT

(11) **EP 1 951 546 B1**
(45) Veröffentlichungstag und Bekanntmachung des Hinweises auf die Patenterteilung: **22.04.2009**
(21) Anmeldenummer: 06806480.7
(22) Anmeldetag: 24.10.2006
(51) Int. Cl.: B60N 2/48, B60N 2/427, B60R 21/13

(54) **ENTRIEGELUNGSVORRICHTUNG**
UNLOCKING DEVICE
DISPOSITIF DE DEVERROUILLAGE

(30) Priorität: 24.11.2005 DE 102005056816
(43) Veröffentlichungstag der Anmeldung: 06.08.2008
(73) Patentinhaber: Hydac Electronic GmbH, 66128 Saarbrücken (DE)
(72) Erfinder: JACOBUS, Heinz, 66125 Dudweiler (DE); WEINGARDT, Alexander, 66117 Saarbrücken (DE)
(74) Vertreter: Bartels, Martin Erich Arthur
(86) Internationale Anmeldenummer: PCT/EP2006/010212
(87) Internationale Veröffentlichungsnummer: WO 2007/059835

(56) Entgegenhaltungen:
- WO-A-01/87666
- WO-A-20/04056606
- DE-A1- 10 215 054
- DE-A1- 19 830 407
- DE-C1- 19 949 944

## Beschreibung

Die Erfindung betrifft eine Entriegelungsvorrichtung, um ein in verriegeltem Zustand befindliches Steuerteil für seine Freigabe anzusteuern, mit einem Betätigungsmagneten, der, in einem Spulenkörper und/oder in Gehäuseteilen des Betätigungsmagneten geführt, ein Betätigungsteil aufweist, das verfahrbar ist und das in einer Betätigungsstellung einen Entriegelungsweg für eine Steuereinrichtung freigibt, die über ein Verriegelungsteil verfügt, das, mittels des Betätigungsteils über die Steuereinrichtung entriegelt, die Bewegungsbahn für das anzusteuernde Steuerteil freigibt, wie z.B. aus DE 10 215 054 bekannt ist.

Dahingehende Entriegelungsvorrichtungen können für eine Vielzahl von Anwendungsfällen eingesetzt werden. Insbesondere dort, wo es darauf ankommt, gezielt und funktionssicher einen Auslösevorgang für ein technisches Bauteil zu realisieren, sind Entriegelungsvorrichtungen mit Betätigungsmagneten vorzuziehen, da der dahingehende Betätigungsmagnet auch im rauhen Alltagsbetrieb, etwa bei auftretenden Schwingungen oder Stößen, erfahrungsgemäß funktionssicher im Gebrauch ist. Mit der erfindungsgemäßen Entriegelungsvorrichtung lassen sich insbesondere im Kraftfahrzeugbereich sicherheitstechnisch relevante Bauteile entriegeln und zur Funktion bringen, sei es in Form eines aufzustellenden Überrollbügels, sei es in Form einer im Crashfall sich nach vorne bewegenden Kopfstütze, um dergestalt den freien Auftreffweg zwischen Hinterkopf des Sitzbenutzers und Kopfauftreff-Fläche an der Kopfstütze zu verringern, etc..

Bei derartigen Entriegelungsvorrichtungen läßt sich der Betätigungsmagnet mit Betätigungsteil und bewegbarer Steuereinrichtung auf sehr kleinem Bauraum unterbringen, so dass sich die dahingehenden Vorrichtungen platzsparend innerhalb von Kraftfahrzeugen unterbringen lassen. Aufgrund des platzsparenden Aufbaus lassen sich solche Entriegelungsvorrichtungen auch dort unmittelbar an der Stelle eines Auslösevorganges einsetzen, wo bisher im Stand der Technik gegebenenfalls erst aufwendig zu handhabende Seil- oder Bowdenzüge über größere Wegstrecken den Auslösevorgang bewerkstelligt haben.

Andererseits besteht bei sicherheitsrelevanten Anwendungen derartiger Entriegelungsvorrichtungen jedoch die Gefahr des Verlustes der Funktionssicherheit. Nach einem Auslösevorgang, bei dem durch Ansteuerung des Steuerteils die betreffende Sicherheitseinrichtung aktiviert wurde, ist es in vielen Fällen erforderlich, dass, um Funktionssicherheit zu gewährleisten, die Sicherheitseinrichtung selbst oder deren Teile vor einer erneuten Inbetriebnahme erst gegen Neuteile ausgetauscht werden. Mit anderen Worten gesagt, besteht die Gefahr, dass versehentlich eine bereits aktivierte Sicherheitseinrichtung in die Ausgangslage zurückgebracht, das Steuerteil mittels der Entriegelungsvorrichtung erneut in den verriegelten Zustand gebracht und die nach erfolgter Aktivierung nicht mehr funktionssichere Sicherheitseinrichtung wieder "scharf gemacht" wird.

Der Erfindung liegt die Aufgabe zugrunde, eine Entriegelungsvorrichtung zur Verfügung zu stellen, bei der die Gefahr eines derartigen Verlustes der Funktionssicherheit einer zugeordneten Sicherheitseinrichtung vermieden ist.

Erfindungsgemäß ist diese Aufgabe durch eine Entriegelungsvorrichtung gelöst, die die Merkmale des Patentanspruches 1 in seiner Gesamtheit aufweist.

Die Besonderheit der Erfindung besteht danach darin, dass für das im Gehäuseteil des Betätigungsmagneten geführte Verriegelungsteil ein Blockierteil vorgesehen ist, welches das Verriegelungsteil in der der Freigabe des Steuerteils entsprechenden entriegelten Stellung hält und dadurch ein ungewolltes erneutes Verriegeln des Steuerteils verhindert.

Bei einem besonders vorteilhaften Ausführungsbeispiel ist das Blockierteil durch eine Bügelfeder gebildet, die mit ihren freien Federenden zumindest teilweise längs des Gehäuseteils für eine Bewegung zwischen Blockierstellung, in der das Verriegelungsteil durch die Bügelfeder in der entriegelten Stellung gehalten ist, und einer Stellung geführt ist, in der das Verriegelungsteil für ein erneutes Verriegeln des Steuerteils freigegeben ist. Hierbei kann die Anordnung vorzugsweise so getroffen sein, dass die Bügelfeder für ein von Hand erfolgendes Verschieben aus der Blockierstellung heraus zugänglich ist.

Die Bügelfeder kann so geformt sein, dass die freien Federenden bei der Blockierstellung zwischen sich einen Klemmspalt zum Festklemmen des in der Entriegelungsposition befindlichen Verriegelungsteiles bilden.

Bei Ausführungsbeispielen, die sich durch eine eine einfache und bequeme Handhabung ermöglichende Bauweise auszeichnen, sind am Gehäuseteil Schrägführungen vorhanden, die bei der Bewegung der Bügelfeder aus der Blockierstellung in die das Verriegelungsteil freigebende Stellung Steuerflächen für die Federenden bilden, die diese voneinander weg spreizen und den Klemmspalt erweitern, um das Verriegelungsteil für das Rückführen in die das Steuerteil verriegelnde Stellung freizugeben.

Im folgenden wird die erfindungsgemäße Entriegelungsvorrichtung für ein Steuerteil gemäß einem Ausführungsbeispiel nach der Zeichnung näher erläutert. Dabei zeigen in prinzipieller und nicht maßstäblicher Darstellung die
- Fig.1: in perspektivischer Anordnung eine Vorderansicht auf die wesentlichen Teile der erfindungsgemäßen Vorrichtung;
- Fig.2 und 3: einmal im verriegelten, einmal im entriegelten Zustand die Vorrichtung nach der Fig.1 von der Seite her gesehen;
- Fig.4: eine perspektivische Draufsicht auf den Betätigungsmagneten mit Sperrklinke;
- Fig. 5: ein teilweise aufgeschnittenes Gehäuse der Vorrichtung mit eingesetztem Blockierelement.

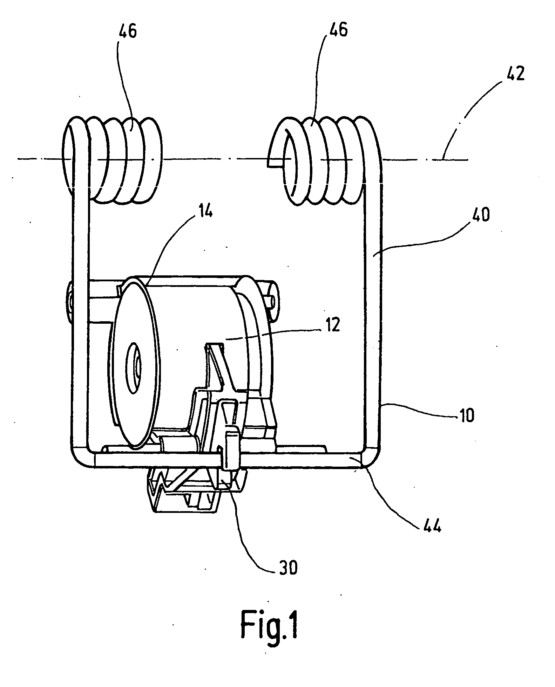

Die Entriegelungsvorrichtung für ein Steuerteil 10 nach der perspektivischen Ansicht gemäß Fig.1 zeigt deren wichtigste Bestandteile, wie einen Betätigungsmagneten 12. Der Betätigungsmagnet 12 weist einen Spulenkörper 14 auf mit einer nicht näher dargestellten Spulenwicklung, in der ein zylinder- oder stangenartiges Betätigungsteil 16 längsverfahrbar geführt ist.

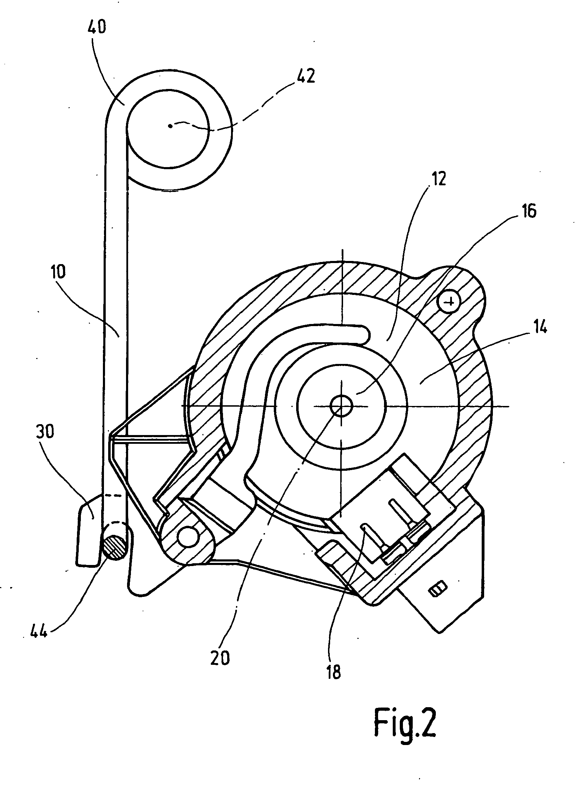

Der in der Art eines üblichen Elektromagneten ausgebildete Betätigungsmagnet 12 ist derart ausgelegt, dass bei Bestromung des Spulenkörpers 14 über den Anschlußstecker 18 das Betätigungsteil 16 nach innen gezogen wird, also in Blickrichtung auf die Fig.2 gesehen in Richtung der hinteren Bildebene. Eine nicht näher dargestellte Rückstellfeder kann bei nicht bestromtem Spulenkörper 14 das Betätigungsteil 16 derart rückstellen, dass dieses mit einem vorgebbaren Überstand über die Vorderseite des Spulenkörpers 14 einschließlich der Vorderseite des Betätigungsmagneten 12 vorsteht. Insoweit ist das Betätigungsteil 16 also entlang einer ersten Achse 20 verfahrbar angeordnet.

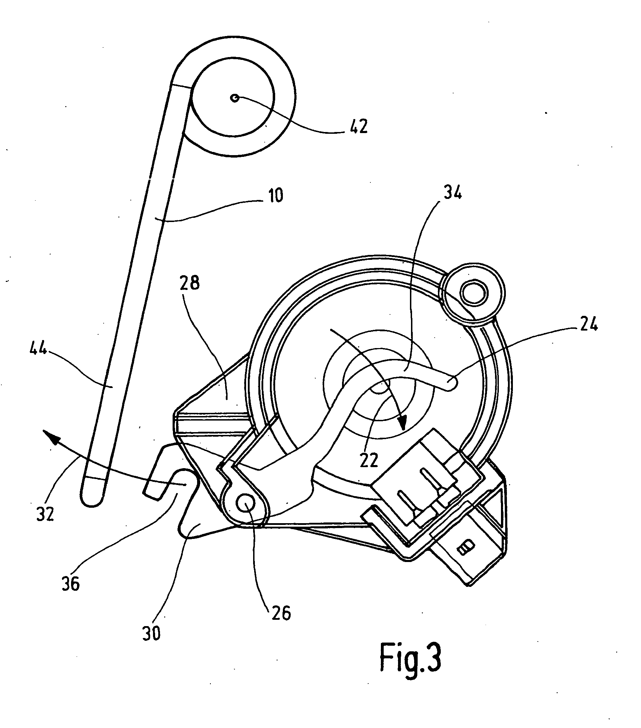

In der in der Fig.3 dargestellten Betätigungsstellung der Entriegelungsvorrichtung ist das Betätigungsteil 16 durch den Betätigungsmagneten 12 nach hinten gezogen und gibt somit einen zu der ersten Achse 20 querverlaufenden Schwenkweg 22 frei, der in der Fig.3 mit einem Pfeil wiedergegeben ist und entlang dieses Schwenkweges 22 verschwenkt die Steuereinrichtung 24 in Uhrzeigerrichtung um eine zweite Achse 26, die parallel zur ersten Achse 20 verläuft. Die dahingehende zweite Achse 26 ist beispielsweise als Schwenkachse oder Schwenkzapfen ausgebildet und mit ihren freien Enden insoweit endseitig in einem Gehäuseteil 28, vorzugsweise aus einem geeigneten Kunststoffmaterial gebildet, geführt. Wie die Fig.1 bis 3 weiter zeigen, verfügt die Steuereinrichtung 24 über ein Verriegelungsteil 30, das mittels des Betätigungsteils 16 über die Steuereinrichtung 24 entriegelt die Bewegungsbahn 32, dargestellt in der Fig.3 mit einem Pfeil, für das anzusteuernde Steuerteil 10 freigibt. Sofern die Fig.1 und 2 die verriegelte Stellung für das Steuerteil 10 betreffen, ist ersichtlich, dass das Verriegelungsteil 30 das Steuerteil 10 zumindest teilweise umfaßt und derart in der verriegelten Stellung festhält.

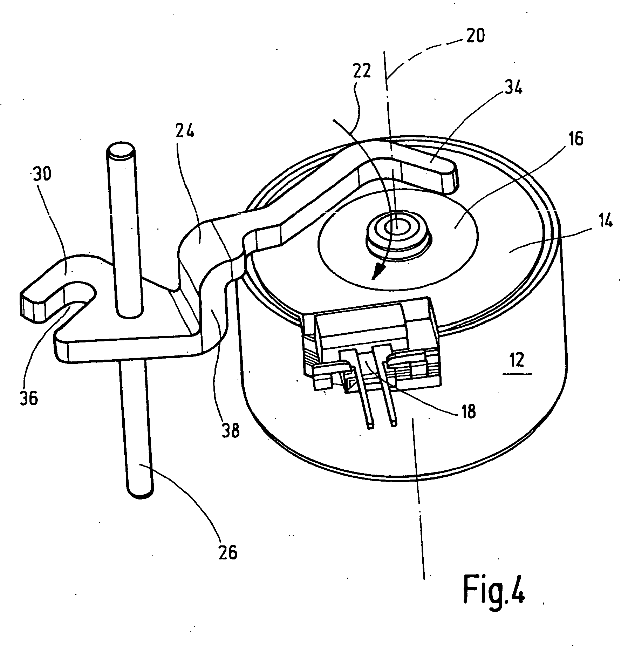

Die Steuereinrichtung 24 weist einen Schwenkhebel 34 auf, wie er in der Fig.4 näher dargestellt ist. Dieser Schwenkhebel 34 ist, wie bereits dargelegt, um die zweite Achse 26 schwenkbar in dem Gehäuseteil 28 geführt, welches der einfacheren Darstellung wegen in Fig.4 weggelassen wurde. Der Schwenkhebel 34 ist an seinem einen freien Ende im unbetätigten Zustand des Betätigungsmagneten 12 in Anlage mit dem Betätigungsteil 16, wobei gemäß der Darstellung nach der Fig.4 gerade das Betätigungsteil 16 in den Spulenkörper 14 des Betätigungsmagneten 12 eingefahren ist und insoweit den Schwenkweg 22 für den Schwenkhebel 34 freigibt. Insoweit bildet in der zurückgezogenen Stellung des Betätigungsteils 16 dieses mit seiner Vorderseite im wesentlichen eine ebene Vorderfläche mit der dem Betrachter der Fig.4 zugewandten Stirnseite des Spulenkörpers 14 aus.

Gemäß der Darstellung nach der Fig.4 ist dort der Schwenkhebel 34 noch in seiner unbetätigten Stellung gezeigt, so dass insoweit am anderen Ende des Schwenkhebels 34 das Steuerteil 10 in der Verriegelungsstellung gehalten ist. Das Verriegelungsteil 30 der Steuereinrichtung 24 ist in der Art einer Klauen- oder Maulöffnung 36 ausgebildet und damit das dahingehende Verriegelungsteil 30 zentral, also kräfteausgeglichen in der Mitte der Vorrichtung angeordnet werden kann (vgl. Fig.1), weist insoweit der Schwenkhebel 34 eine axiale Versatzstelle 38 auf, um die dahingehende Mittenanordnung gewährleisten zu können. Für einen Entriegelungsvorgang schwenkt daher die Klauen- oder Maulöffnung 36 im Uhrzeigersinn um die Schwenkachse 26 aus der verriegelten Position nach den Fig.1 und 2 in eine entriegelte Stillung nach der Fig.3.

Bei bestimmten Anwendungsaufgaben wäre es auch denkbar, beispielsweise an der zweiten Achse 26 selbst eine Drehfeder od. dgl. anzubringen, um insoweit den Schwenkhebel längs des Schwenkweges 22 zu bewegen, sobald das Betätigungsteil 16 in den Spulenkörper 14 eingezogen ist. Im vorliegenden Fall wird jedoch im betätigten Zustand des Betätigungsmagneten 12 das Steuerteil 10 mittels eines Energiespeichers die Entriegelung für den Schwenkhebel 34 von außen her veranlassen, der dann insoweit um die zweite Achse 26 in die Entriegelungsstellung verschwenkt. Hierfür sieht das Steuerteil 10 eine Bügelfeder, vorzugsweise in der Art einer Doppel-Bügelfeder 40 vor, deren Energiespeicher in Form von Federenergie im entriegelten Zustand ein Wegschwenken längs der Bewegungsbahn 32 aus der Steuereinrichtung 24 für das Steuerteil 10 ermöglicht, und zwar um eine dritte Achse 42, die wiederum parallel zu der ersten und zweiten Achse 20,26 verläuft. Aufgrund der Eigendynamik des Steuerteils 10 in Form der Doppel-Bügelfeder 40 genügt es also, den Betätigungsmagneten 12 auszulösen, um die Entriegelung insoweit fremdgesteuert vornehmen zu können.

Der Betätigungsmagnet 12 ist topfartig ausgebildet und weist insoweit einen ringförmigen Spulenkörper 14 auf, dessen Wicklungsenden an den Anschlußstecker 18 entsprechend angeschlossen sind. Als Betätigungsteil 16 umfaßt der Spulenkörper 14 eine flachzylindrische Betätigungsstange, die vergleichbar eine Topfform aufweist zu dem ringförmigen Spulenkörper 14 und in diesem längsverfahrbar geführt ist. Wie des weiteren die Fig.4 zeigt, ist der Schwenkhebel 34 an seinem einen freien, dem Betätigungsteil 16 zugewandten Ende klinkenartig sich verjüngend mit einer Krümmung versehen, die zumindest teilweise der Krümmung des Außenumfangs des Betätigungsteils 16 nachfolgt (vgl. auch Fig.2). Die genannte Doppel-Bügelfeder 40 mit ihrem Bügelteil 44 greift in der Verriegelungsstellung in das Verriegelungsteil 30 der Steuereinrichtung 24 ein, wobei die beiden, die Doppelanordnung betreffenden Rundfedern 46 die dritte Achse 42 mittig umfassen.

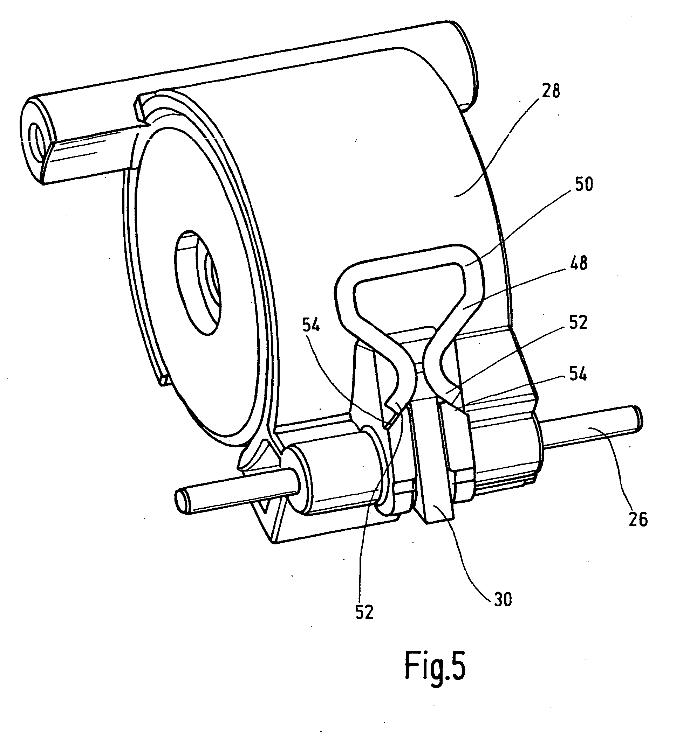

Wird gemäß der Darstellung nach der Fig.3 im Gegenuhrzeigersinn das Steuerteil 10 um die Achse 42 rückverschwenkt, rastet insoweit das Bügelteil 44 wieder in die Klauen- oder Maulöffnung 36 ein und der Schwenkhebel 24 verschwenkt entgegen dem Uhrzeigersinn in seine Ausgangsstellung nach der Fig.4. Wird nun der Betätigungsmagnet 12 nicht länger bestromt, fährt das Betätigungsteil 16 beispielsweise unter der Wirkung einer nicht näher dargestellten Rückstellfeder aus und liegt dann mit seinem Außenumfang wieder an der Innenseite des Schwenkhebels 34 unmittelbar an. Insoweit könnte also über einen entsprechenden Rückstellvorgang die Entriegelungsvorrichtung wieder "scharf" gemacht werden. Bei der Erfindung wird dies verhindert, beispielsweise weil Teile einer Sicherheitseinrichtung (nicht dargestellt) oder die Sicherheitseinrichtung selbst zu tauschen ist. Daher ist Vorsorge dagegen getroffen, dass das Bügelteil 44 wieder ungewollt in entsprechenden Eingriff mit dem Verriegelungsteil 30 und seiner Klauen- und Maulöffnung 36 kommt. Um dies zu verhindern, wird das Verriegelungsteil 30 in seiner in der Fig.3 gezeigten Entriegelungsstellung gehalten. Hierzu dient das in der Fig.5 dargestellte Blockierteil 48, das ein ungewolltes erneutes Verriegeln des Steuerteils 10 verhindert.

Das Blockierteil 48 besteht gleichfalls aus einer Bügelfeder 50, die mit ihren freien Federenden 52 zumindest teilweise längs des Gehäuseteils 28 geführt in eine das Verriegelungsteil 30 freigebende Stellung bewegbar ist. Um die dahingehenden Verhältnisse besser zu verdeutlichen, ist in der Fig.5 bezogen auf die Frontansicht ein Teil der Wandung des Gehäuseteils 28 weggelassen, um so den Angriff der Bügelfeder 50 an der Oberseite des Verriegelungsteils 30 zu verdeutlichen. Bei der in der Fig.5 gezeigten Stellung ist die Bügelfeder 50 als Blockierteil in ihrer Blockierstellung gezeigt. Wird der Entriegelungsvorgang ausgelöst, dann schnappt das Verriegelungsteil 30 nach oben und kommt in den Klemmspalt zwischen den Federenden 52.

Die Federenden 52 klemmen dann zwischen sich einen Teil des Verriegelungsteils 30 derart ein, dass dieser in der Entriegelungsposition nach der Fig.3 gehalten ist. Wird nun in Blickrichtung auf die Fig.5 gesehen von Hand die Bügelfeder 50 nach unten verschoben, gleiten die freien Federenden 52 entlang von Schrägführungen 54 des Gehäuseteils 28 ab, so dass die Federenden 52 sich voneinander wegspreizen und dann den Schwenkweg für das Verriegelungsteil 30 insoweit freigeben, damit dieses wieder in die Verriegelungsstellung zurückgehen kann. Bei einem erneuten Entriegelungsvorgang schnappt das Verriegelungsteil 30 wieder nach oben und nimmt dergestalt die Bügelfeder 50 unter erneuter Bildung des Klemmspaltes für das Verriegelungsteil 30 mit, so dass insofern dieses dann wieder in seiner entriegelten Lage blockiert ist und nicht ungewollt in die Verriegelungsstellung zurück verschwenkt werden kann.

Die erfindungsgemäße Entriegelungseinrichtung läßt sich für eine Vielzahl an Anwendungen einsetzen, und anstelle eines Steuerteils 10 in Form einer Doppel-Bügelfederanordnung 40 kann auch eine einfache Feder (nicht dargestellt) treten. Auch lassen sich sonstige technische Komponenten, wie beispielsweise Teile eines Überrollbügelsystems, von der Klauen- oder Maulöffnung 36 des Verriegelungsteils 30 halten, so dass insoweit der Anwendungsbereich beliebig erweiterbar ist.

Die erfindungsgemäße Lösung zeichnet sich insbesondere auch noch dadurch aus, dass die Funktionssteuerung über einen Einhebel erfolgt in Form des Schwenkhebels 34.

## Patentansprüche

1. Entriegelungsvorrichtung, um ein in verriegeltem Zustand befindliches Steuerteil (10) für seine Freigabe anzusteuern, mit einem Betätigungsmagneten (12), der, in einem Spulenkörper (14) und/oder in Gehäuseteilen des Betätigungsmagneten (12) geführt, ein Betätigungsteil (16) aufweist, das verfahrbar ist und das in einer Betätigungsstellung einen Entriegelungsweg (22) für eine Steuereinrichtung (24) freigibt, die über ein Verriegelungsteil (30) verfügt, das, mittels des Betätigungsteils (16) über die Steuereinrichtung (24) entriegelt, die Bewegungsbahn (32) für das anzusteuernde Steuerteil (10) freigibt, **dadurch gekennzeichnet, dass** das Verriegelungsteil (30) im Gehäuseteil (28) des Betätigungsmagneten (12) geführt ist und, an diesem mittels eines Blockierteils (48) in der der Freigabe des Steuerteils (10) entsprechenden entriegelten Stellung gehalten, ein ungewolltes erneutes Verriegeln des Steuerteils (10) verhindert.

2. Entriegelungsvorrichtung nach Anspruch 1, **dadurch gekennzeichnet, dass** das Blockierteil (48) durch eine Bügelfeder (50) gebildet ist, die mit ihren freien Federenden (52) zumindest teilweise längs des Gehäuseteils (28) für eine Bewegung zwischen Blockierstellung, in der das Verriegelungsteil (30) durch die Bügelfeder (50) in der entriegelten Stellung gehalten ist, und einer Stellung geführt ist, in der das Verriegelungsteil (30) für ein erneutes Verriegeln des Steuerteiles (10) freigegeben ist.

3. Entriegelungsvorrichtung nach Anspruch 2, **dadurch gekennzeichnet, dass** die freien Federenden (52) der Bügelfeder (50) bei der Blockierstellung zwischen sich einen Klemmspalt zum Festklemmen des in der Entriegelungsposition befindlichen Verriegelungsteiles (30) bilden.

4. Entriegelungsvorrichtung nach Anspruch 3, **dadurch gekennzeichnet, dass** am Gehäuseteil (28) Schrägführungen (54) vorhanden sind, die bei der Bewegung der Bügelfeder (50) aus der Blockierstellung in die das Verriegelungsteil (30) freigebende Stellung Steuerflächen für die Federenden (52) bilden, die diese voneinander weg spreizen und den Klemmspalt erweitern, um das Verriegelungsteil (30) für das Rückführen in die das Steuerteil (10) verriegelnde Stellung freizugeben.

## Claims

1. An unlocking device in order to actuate a control part (10) in the locked state for its release, with an actuating magnet (12) which, guided in a coil element (14) and/or in housing parts of the actuating magnet (12), has an actuating part (16) which can be displaced and which releases, in an actuation position, an unlocking path (22) for a control device (24) which has a locking part (30) which, when unlocked by means of the actuating part (16) via the control device (24), releases the trajectory (32) for the control part (10) to be actuated**, characterised in that** the locking part (30) is guided within the housing part (28) of the actuating magnet (12) and, held on the latter by means of a blocking part (48) in the unlocked position corresponding to the release of the control part (10), prevents unwanted re-locking of the control part (10).

2. The unlocking device according to Claim 1, **characterised in that** the blocking part (48) is formed by a bow spring (50) which with its free spring ends (52) is guided at least partially along the housing part (28) for a movement between the blocking position, in which the locking part (30) is held by the bow spring (50) in the unlocked position, and a position in which the locking part (30) is released for re-locking of the control part (10).

3. The unlocking device according to Claim 2, **characterised in that** in the blocking position the free spring ends (52) of the bow spring (50) form between them a clamping gap for securely clamping the locking part (30) located in the unlocked position.

4. The unlocking device according to Claim 3, **characterised in that** on the housing part (28) inclined guides (54) are provided which, upon movement of the bow spring (50) from the blocking position into the position releasing the locking part (30), form control surfaces for the spring ends (52) which force the latter apart from one another and extend the camping gap in order to release the locking part (30) for returning to the position locking the control part (10).

## Revendications

1. Dispositif de déverrouillage pour commander pour la libérer une partie (10) de commande se trouvant à l'état verrouillé, comprenant un aimant (12) d'actionnement, qui a une partie (16) d'actionnement passant dans un corps (14) de bobine et/ou dans des parties d'enveloppe de l'aimant (12) d'actionnement, qui est déplaçable et qui libère dans une position d'actionnement un trajet (22) de déverrouillage pour un dispositif (24) de commande disposant d'une partie (30) de verrouillage qui déverrouillée, au moyen de la partie (16) d'actionnement par le dispositif (24) de commande, libère la voie (32) de déplacement pour la partie (10) de commande à commander, **caractérisé en ce que** la partie (30) de verrouillage passe dans la partie (18) d'enveloppe de l'aimant (12) d'actionnement et, en y étant maintenue au moyen d'une partie (48) de blocage dans la position déverrouillée correspondant à la libération de la partie (10) de commande, empêche un reverrouillage involontaire de la partie (10) de commande.

2. Dispositif de déverrouillage suivant la revendication 1, **caractérisé en ce que** la partie (48) de blocage est formée par un ressort (50) à étrier, qui passe par ses extrémités (52) libres de ressort, au moins en partie, le long de la partie (28) d'enveloppe pour un mouvement entre une position de blocage, dans laquelle la partie (30) de verrouillage est maintenue dans la position déverrouillée par le ressort (50) à étrier, et une position dans laquelle la partie (30) de verrouillage est libérée pour un reverrouillage de la partie (10) de commande.

3. Dispositif de déverrouillage suivant la revendication 2, **caractérisé en ce que** les extrémités (52) libres du ressort (50) à étrier forment, dans la position de blocage, un intervalle de serrage pour serrer la partie (30) de verrouillage se trouvant dans la position de déverrouillage.

4. Dispositif de déverrouillage suivant la revendication 3, **caractérisé en ce que**, sur la partie (28) d'enveloppe, il y a des guidages (54) inclinés qui forment, lors du déplacement du ressort (50) à étrier, de la position de blocage à la position libérant la partie (30) de verrouillage, des surfaces de commande pour les extrémités (50) du ressort, qui écartent celles-ci l'une de l'autre et élargissent l'intervalle de serrage pour libérer la partie (30) de verrouillage en vue du retour dans la position verrouillant la partie (10) de commande.
